# EUROPÄISCHE PATENTSCHRIFT

(11) **EP 2 157 892 B1**
(45) Veröffentlichungstag und Bekanntmachung des Hinweises auf die Patenterteilung: **08.04.2015**
(21) Anmeldenummer: 08773399.4
(22) Anmeldetag: 12.06.2008
(51) Int. Cl.: A47J 31/40

(54) **BRÜHEINHEIT EINES GETRÄNKEZUBEREITUNGSGERÄTES**
BREWING UNIT OF A DEVICE FOR PREPARING BEVERAGES
UNITÉ DE PERCOLATION POUR UN APPAREIL DE PRÉPARATION DE BOISSONS

(30) Priorität: 21.06.2007 DE 202007008814 U
(43) Veröffentlichungstag der Anmeldung: 03.03.2010
(73) Patentinhaber: Eugster/Frismag AG, 8580 Amriswil (CH)
(72) Erfinder: MAHLICH, Gotthard, 61476 Kronberg (DE)
(74) Vertreter: Schubert, Siegmar
(86) Internationale Anmeldenummer: PCT/EP2008/004712
(87) Internationale Veröffentlichungsnummer: WO 2008/155062

(56) Entgegenhaltungen:
- DE-A1- 1 679 080
- DE-U1-202006 008 409
- DE-U1-202007 002 910
- US-A- 5 650 186
- US-A1- 2002 145 010

## Beschreibung

Die Erfindung betrifft eine Brüheinheit eines Getränkezubereitungsgerätes gemäß dem Oberbegriff des Anspruchs 1.

Zum Stand der Technik gehören Getränkezubereitungsgeräte mit einer Brüheinheit die für den Einsatz von gemahlenem losen Kaffeepulver oder vorportionierten Kaffee- oder Kakaoportionseinheiten oder Milchkonzentrat- oder Milchpulvereinheiten vorgesehen sind. Diese Portionseinheiten können in Form von Aluminium- oder Kunststoffkapseln oder in Form von Pouches vorliegen und ihr Inhalt ist jeweils für die Zubereitung einer üblichen Menge eines Getränkes wie z.B. einer Tasse Kaffee oder eines Kaffee-Milchgetränkes ausgelegt.

Diese Brüheinheiten für die Verwendung von losem Kaffeepulver oder für den Einsatz von vorportionierten Portionseinheiten mit pulverförmigen Getränke-Basisstoffen für die Getränkezubereitung sind Stand der Technik und brauchen nicht näher beschrieben zu werden.

Ebenso ist die Verwendung von Milchpulver oder Milchkonzentrat an Stelle von Frischmilch für die Zubereitung von Milchschaum für Cappuccino, d.h. einer Kombination von Kaffee und darauf aufliegendem Milchschaum, bekannt. In Haushaltszubereitungsgeräten werden dazu bevorzugt Milchpulver- oder Milchkonzentratkapseln verwendet.

In kommerziellen Kaffeezubereitungsgeräten, insbesondere in sog.

Vendingautomaten, wird dagegen zu diesem Zweck das Milchpulver in fest in das Zubereitungsgerät integrierten nachfüllbaren Behältern bevorratet, aus denen es portionsweise, d.h. jeweils für eine Tasse des zuzubereitenden Getränkes, durch Förderschnecken in eine Misch- und Schäumvorrichtung transportiert, dort mit Wasser aufgemischt und mittels eines rotierenden Schäumquirls aufgeschäumt wird.

In der Patentanmeldung AZ DE 20 2006 008 409.6 ist eine mit Milchpulver arbeitende Schäumvorrichtung beschrieben, die aus einem in dem Zubereitungsgerät integrierten Milchpulverbehälter programmgesteuert jeweils eine Milchpulverportion abruft und in einer speziellen Schäumvorrichtung unter Beigabe von Zubereitungswasser und Luft Milchschaum produziert. Diese Lösung unterscheidet sich von den in den Vendingautomaten gebräuchlichen Quirl-Schäumern dadurch, dass das eigentliche Aufschäumen in einer Schäumkammer durch Rotationsverwirbelung von Milch und Luft und nicht mit einem mechanischen Quirl erfolgt.

Die Art der portionsweisen Milchpulverzugabe aus einem Vorratsbehälter hat den Vorteil, dass nicht für jede Cappuccinozubereitung eine neue Portionseinheit in das Zubereitungsgerät gelegt werden muss, aber den Nachteil, dass da nicht jedes handelsüblich käufliche Milchpulver zur Milchschaumerzeugung geeignet ist, ungeeignetes Milchpulver in den Vorratsbehälter gefüllt werden kann und kein Milchschaum zufriedenstellender Konsistenz entsteht. Im Unterschied zu der portionsweisen Zugabe von Milchpulver aus einem Vorratsbehälter werden insbesondere bei Haushalt-Kaffeezubereitungsgeräten, wie schon erwähnt, Milchpulver-Portionskapseln verwendet in denen jeweils nur eine Milchpulverportion für eine Tasse Cappuccino beinhaltet ist. Die Portionseinheiten können dabei sowohl in Form von Aluminium- oder Kunststoffkapseln vorliegen, und beinhalten Milchkonzentrat oder aufschäumfähiges Milchpulver. Bei diesen Portionskapseln erfolgt die Zuführung des Zubereitungswassers mittels einer wasserführenden Einstichnadel die in die Kapseln eingestochen wird. Das Wasser wird dabei mittels einer Pumpe aus einem Wasserbehälter und durch einen Durchlauferhitzer gepumpt und über eine Heißwasserzuführleitung der Einstichnadeln zugeführt. Anschließend wird das Milchpulver in der Kapsel aufgelöst und mittels einer in der Kapsel angeordneten Schäumvorrichtung aufgeschäumt oder bei Kapseln ohne integrierte Schäumvorrichtung wird die durch das Auflösen entstandene Milch in einer separaten Aufschäumvorrichtung unter Zuführung von Luft aufgeschäumt. Diese Art der Milchschaum-Zubereitung mit Portionskapseln wird in Kaffeezubereitungsgeräten verwendet, die auch für die Kaffeezubereitung vorportionierte Kaffeekapseln verwenden.

Nachteil der Verwendung von Einportion-Milchpulverkapseln ist, dass für jede Cappuccinozubereitung eine neue Kapsel eingelegt und entsorgt werden muss und dass in diesen Getränkezubereitungsgeräten die Kapseln mit verschiedenen Inhalten, d.h. Kapseln für Kaffee, Kakao, Milchkonzentrat oder Milchpulver verarbeiten, nur eine Aufnahmekammer für die verschiedenen Kapseln vorhanden ist. Damit ist es bei diesen Getränkezubereitungsgeräten zur Zubereitung eines Kaffee-Milchgetränkes, bedingt durch die Nutzung der gleichen Aufnahmekammer für Kaffee-, Kakao- und Milchkonzentrat- oder Milchpulverkapseln zwangsläufig erforderlich, dass die jeweils zweite Zubereitungsart in einem zweiten Arbeitsgang erfolgen muss. Das heißt, dass z.B. für eine Cappuccinozubereitung nach dem Milchschaumzubereitungszyklus erst die verbrauchte Milchkonzentrat- oder Milchpulverkapsel aus der Brüheinheit entsorgt werden muss, daran anschließend die Kaffeekapsel in die Brüheinheit eingelegt und schließlich nach dem Kaffeezubereitungszyklus entsorgt werden muss. Außerdem haben damit alle Kapseln die selben Wasserzuführungs- und Getränkeaustrittsvorrichtungen.

Systembedingt ist diese Art der Zubereitung eines Kaffeemilchgetränkes unökonomisch, da für jede Portion eines Kaffeemilchgetränkes zwei Einportions-Kapseln benötigt werden und wegen der nacheinander zu erfolgenden Be- und Entladungsvorgänge umständlich ist und mit Zeitverzögerungen einhergeht.

Nachteil der ortsfesten nachfüllbaren Milchpulverbehälter ist, dass auch nicht schäumfähiges Milchpulver eingefüllt werden kann und kein Milchschaum zufriedenstellender Konsistenz entsteht. Die US 2002/145010 A1 zeigt eine weiter Brüheinheit.

Die vorliegende Erfindung geht von der Aufgabe aus, eine Brüheinheit für ein Getränkezubereitungsgerät vorzuschlagen, mit der die Getränkezubereitung, insbesondere eine Kaffee- oder Kakaozubereitung, sowie die Milch- oder Milchschaumerzeugung in einem rationelleren Zubereitungsablauf erfolgen können bei dem Verzögerungen durch Beschickungs- und Entsorgungsvorgänge verkürzt sind oder vermieden werden.

Zu diesem Zweck wird ein Getränkezubereitungsgerät mit den Merkmalen des Anspruch 1 vorgeschlagen.

Zur Lösung der Aufgabe wird ausgegangen von einer Brüheinheit des Zubereitungsgerätes mit einer ersten Aufnahmevorrichtung in Form einer Brühkammer für die Aufnahme von losem Kaffeepulver oder einer Kaffee- oder Kakaoportionseinheit und mit einer zweiten Aufnahmevorrichtung in Form einer Andockvorrichtung, die zur Aufnahme eines gekapselten austauschbaren Mehrportions-Milchpulverbehälters vorgesehen ist, und der eine Misch- und Schäumvorrichtung zugeordnet ist, die zur Zubereitung von Milch oder Milchschaum geeignet ist und die einen Auslauf für die bereitete Milch oder den Milchschaum aufweist.

Mit dieser Brüheinheit können die Kaffee- oder Kakaozubereitung einerseits und die Milch- oder Milchschaumerzeugung andererseits je nach Vorgabe bzw. Steuerung der Brüheinheit gleichzeitig oder zeitlich versetzt ablaufen, wobei das Bestücken der Brüheinheit mit einer Einportion-Milchpulverkapsel für jede Milchgetränkzubereitung entfällt.

Erfindungsgemäß ist die Andockvorrichtung mit einem Öffnungselement ausgestattet, das geeignet ist, ein Verschlusselement des Mehrportionsbehälters durch Anbringen des Mehrportionsbehälters an der Andockvorrichtung aus seiner Verschlussposition zu stoßen oder durchzustoßen.

Eine hierfür besonders geeignete Bauform der Andockvorrichtung ist in Anspruch 2 angegeben.

Der Mehrportion-Milchpulverbehälter hat den Vorteil der ortsfesten großen Vorratsbehälter, dass nicht für jede Cappuccinozubereitung eine neue Kapsel eingelegt werden muss, mit dem Vorteil der Einportionskapsel, dass garantiert nur schäumfähiges Milchpulver zur Anwendung kommt vereint und Milchpulver für mehrere Milchschaumzubereitungen enthält und als Austauschteil in das Zubereitungsgerät eingebracht werden kann. Nur durch die gekapselte und versiegelte Kapsel ist damit gewährleistet, dass nur optimal schäumfähige Milchpulversorten Verwendung finden.

Diese Art der Milchpulverbevorratung mit einem Mehrportion-Milchpulverbehälter kann dabei in allen Kaffeezubereitungsgeräten, unabhängig davon, ob es sich um Vollautomaten handelt, die mit Kaffeemahlwerken ausgestattet sind oder Geräten, die mit Brühkolben für loses Kaffeepulver oder mit Kaffee- Portionskapseln oder Kaffeepouches arbeiten, sofern diese mit einer entsprechenden Andockvorrichtung für einen erfindungsgemäßen Mehrportion-Milchpulverbehälter und einer Misch- und Schäumvorrichtung ausgestattet sind, Verwendung finden. Die Aufbereitung und das Schäumen von Milchpulver kann dabei sowohl mit mechanischen Quirlen als auch mit der Rotationsverwirbelungsmethode erfolgen.

Eine derartige Brüheinheit kann vielseitig benutzt werden, z.B. um nur Kaffee zuzubereiten muss nur die Kaffeebrühkammer mit dem losen Kaffeepulver gefüllt oder mit einer Kaffeeportionseinheit bestückt werden, oder nur zur Milch bzw. Milchschaumzubereitung braucht für mehrere Zubereitungen nur ein Mehrportion-Milchpulverbehälter angedockt zu werden, oder zur Zubereitung eines Cappuccino oder Latte Macchiato müssen sowohl die Kaffeebrühkammer mit Kaffee oder einer Kaffeeportionseinheit gefüllt bzw. bestückt werden und für mehrere Zubereitungen braucht nur ein Mehrportion-Milchpulverbehälter angedockt zu werden. Zweckmäßigerweise sind gemäß den Ansprüchen 18 und 19 die Brühkammer und die Andockvorrichtung mit Prüfvorrichtungen versehen, die jeweils das Vorhandensein einer Kaffeeportionseinheit oder eines Mehrportion-Milchpulverbehälters prüfen, und mittels einer Steuerungsanordnung die Zubereitungswasserzuführung nach den Ansprüchen 13 bis 17 mittels eines in den Zubereitungswasserzuführungen liegenden motorisch angetriebenen Keramikscheibenventils oder mittels Magnet- oder Schlauchventilen nur dann freischalten, wenn die entsprechenden Positionen besetzt sind. Damit wird eine sichere Funktion der Brüheinheit bei wechselnder oder gleichzeitiger Belegung der Brühkammer und /oder der Andockvorrichtung gewährleistet.

Ein wesentlicher Aspekt der Brüheinheit besteht darin, dass diese bevorzugt zur Zubereitung eines Kaffee-Milchgetränkes von Milch oder Milchschaum verwendet werden kann. Dazu ist es notwendig, dass das aus dem Mehrportion-Milchpulverbehälter entnommene Milchpulver in einer Misch- und Schäumvorrichtung mit Wasser gemischt und je nach gewünschter Getränkeart aufgeschäumt werden kann. Zur diesem Vorgang ist der Andockvorrichtung für den Mehrportion-Milchpulverbehälter eine Misch- und Schäumvorrichtung zugeordnet die unterhalb der Andockvorrichtung angeordnet ist und mit deren Milchpulverauslauf in Verbindung steht. Gleichwohl ist es möglich gemäß den Ansprüchen 7 und 8, die Schäumvorrichtung für Reinigungszwecke auswechselbar zu gestalten oder als austauschbares Wegwerfteil zu verwirklichen, um ohne zeitaufwendige Spül und Reinigungsvargänge einen hygienischen Betrieb zu gewährleisten. Konstruktiv sind die Kaffeebrühkammer und die Andockeinheit mit der Misch- und Schäumvorrichtung kompakt als eine gemeinsame Baueinheit ausgebildet. Es ist aber auch möglich, die Kaffeebrüheinheit und die Andockeinheit mit der Misch- und Schäumvorrichtung als separate Einheiten zu konzipieren.

Unabhängig davon, ob die beiden Vorrichtungen in einem gemeinsamen Bauteil integriert oder getrennt voneinander angeordnet sind, werden die Ausläufe der beiden Vorrichtungen zweckmäßigerweise so angeordnet, dass sie die in ihnen bereiteten Produkte sowohl in ein einziges Auffanggefäß als auch in zwei nebeneinander stehende Auffanggefäße leiten können. Statt dessen ist es aber in beiden Fällen der in einer Baueinheit integrierten oder nicht integrierten Anordnung der Brühkammer und der Misch -und Schäumvorrichtung möglich, gemäß Anspruch 9 deren Ausläufe zu einem gemeinsamen Auslaufkanal zusammenzuführen, um durch diesen ein einheitliches Getränkeprodukt oder zeitlich hintereinander zwei Getränkeprodukte in das Aufnahmegefäß zu leiten.

Auch ist es unbenommen, gemäß Anspruch 24 die Brüheinheit zusätzlich mit einer Dampfauslassdüse für die Zubereitung von Milchschaum aus Frischmilch zu versehen.

Weiterhin kann die Brüheinheit zur hygienischen Reinigung der Brühkammer und der Misch- und Schäumvorrichtung gemäß Anspruch 12 mit einer für beide Vorrichtungen gleichzeitig aktivierbaren Spülvorrichtung versehen sein, wobei eine Spülung vor oder nach einem Getränkezubereitungszyklus erfolgen kann. Zur flexiblen Zubereitung verschiedener Getränke sowie zur Milchaufbereitung, insbesondere Herstellung von Milchschaum, fördert eine Pumpe Wasser aus einem Wasservorratsbehälter durch einen Durchlauferhitzer und unter Zwischenschaltung einer Ventilanordnung und einem Durchflussmesser in die Kaffeebrühkammer und/oder die Misch- und Schäumvorrichtung.

Die Ventilanordnung kann von einer Steuerungsanordnung gemäß Anspruch 14 so aktiviert werden, dass Wasser im wesentlichen gleichzeitig der Brühkammer und der Misch- und Schäumvorrichtung zugeführt wird oder diesen beiden Zubereitungsvorrichtungen zeitlich gestaffelt zugeführt wird, oder aber lediglich der Brühkammer oder nur der Misch- und Schäumvorrichtung zugeleitet wird. Mit der Steuerungsanordnung werden also die Aktivierung von nur einer oder beiden Zubereitungsvorrichtungen, die Zubereitungsreihenfolge und die jeweils zu dosierenden Wassermengen gesteuert. Damit ergeben sich insbesondere für ein Kaffee-Milchgetränk folgende Möglichkeiten: Gleichzeitige Zubereitung von Kaffee und Milch oder Milchschaum, oder erst Brühen von Kaffee und dann Zubereitung von Milchschaum, oder aber erst Zubereitung von Milchschaum und dann Brühen von Kaffee oder erst Zubereiten von Milch, dann Milchschaum und schließlich Espresso. Dabei kann zusätzlich die verabreichte Wassermenge und die daraus resultierende Getränkemenge gewählt werden.

Die Wasserzufuhr in die Brühkammer und/oder in die Misch- und Schäumvorrichtung erfolgt dabei, wie bereits geschildert, gemäß Anspruch 14, mittels einer Ventilanordnung, die bevorzugt von Ausgängen der Steuerungsanordnung gesteuert wird und zwischen dem Durchlauferhitzer und der Brühkammer bzw. der Misch- und Schäumvorrichtung angeordnet ist. Die gesteuerte Ventilanordnung kann bevorzugt nach Anspruch 15 als Keramikscheibenventil realisiert sein, das zur Zubereitung hochwertiger Getränke besonders geeignet ist. Gemäß Anspruch 16 können die gesteuerten Ventile aber auch als einzelne Magnetventile oder gemäß Anspruch 17 als Schlauchklemmventile verwirklicht sein.

Eine Zubereitungswasser-Mengensteuerung kann mittels der genannten Ventile und kontrolliert mittels in den Versorgungsleitungen liegenden Durchflussmessern (flow meter) und der Steuervorrichtung oder von Hand, dem subjektiven Geschmack entsprechend, erfolgen.

Wie oben erwähnt können gemäß Anspruch 19 eine Prüfeinheit an der

Kaffeebrühkammer und gemäß Anspruch 18 eine Prüfvorrichtung an der zweiten Aufnahmevorrichtung in Verbindung mit der Steuerungsanordnung eine Wasserzufuhr über die gesteuerten Ventile zu einer der Zubereitungsvorrichtung bzw. zu beiden nur freischalten, wenn in die Aufnahmevorrichtung jeweils eine Portionseinheit oder ein Mehrportion-Milchpulverbehälter eingesetzt ist.

Weiterhin ist es zur Erhöhung der Betriebssicherheit gemäß Anspruch 20 zweckmäßig, Prüfmittel zum Wasserzufuhrstopp bei geöffneter Brühkammer in Verbindung mit der Steuerungsanordnung und den gesteuerten Ventilen vorzusehen.

Die Zubereitung eines gewünschten Getränkes kann, gemäß Anspruch 21, fest programmiert automatisch erfolgen, indem die Reihenfolge der Zubereitung der Getränkekomponenten sowie deren Menge, insbesondere für Kaffee- und Milchschaumerzeugung, fest programmiert ist. Vorteilhaft können mehrere solcher Programme für verschiedene Getränke gemäß Anspruch 22 in der Steuerungsanordnung gespeichert sein und mittels einer Auswahlvorrichtung ausgewählt werden.

Für die Bauform des zur Verwendung vorgeschlagenen Mehrportions-Milchpulverbehälters sind dabei verschiedene Versionen möglich. Bevorzugten Ausführungsformen ist dabei gemeinsam, dass der Mehrportion-Milchpulverbehälter in Form einer zylindrischen Hülse dargestellt ist die an ihrem oberen Ende gemäß fest mit einem Deckel verschlossen ist und sich an ihrem unteren Ende trichterförmig nach unten in Richtung des Milchpulverauslaufes verjüngt und in einen Hals übergeht der sowohl die unteren Verschlussanordnungen des Mehrportions-Milchpulverbehälters und bevorzugt auch die Andock- und Verriegelungselemente für das Zusammenwirken mit den Andockelementen des Getränkezubereitungsgerätes enthält.

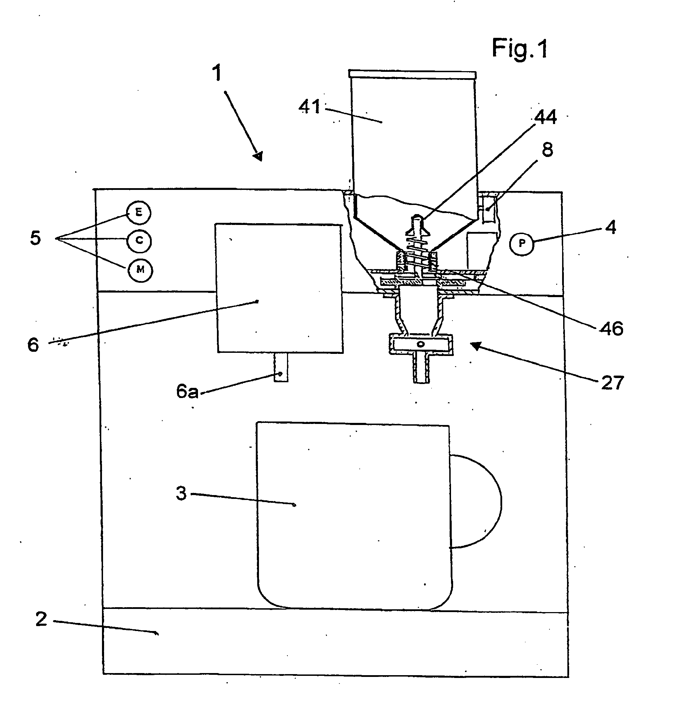

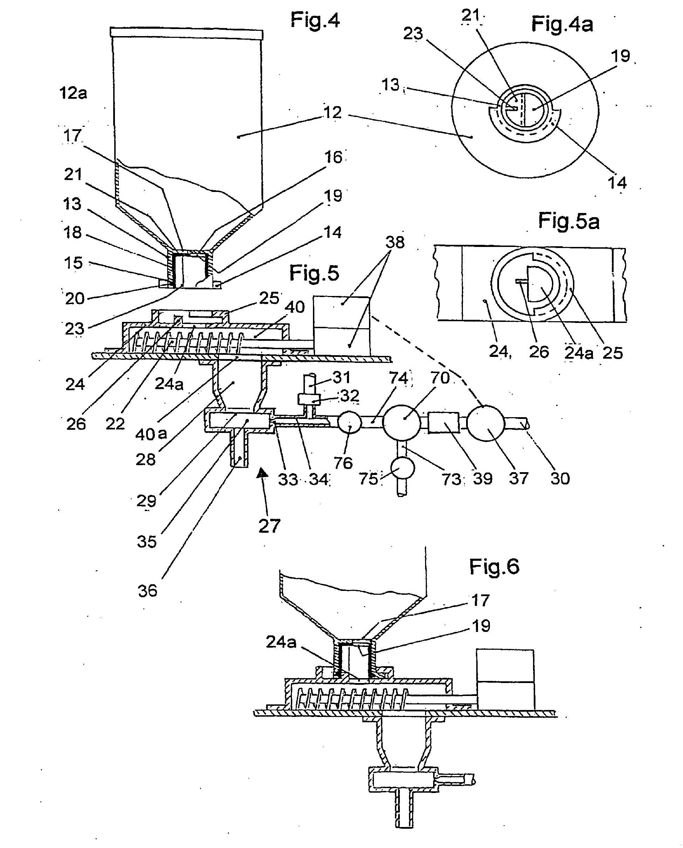

Vorstellbar ist aber auch ein Mehrportions-Milchpulverbehälter bei dem z.B. eine Folie den unverjüngten Zylinderboden des Mehrportion-Milchpulverbehälters, der auch mit den Andockelementen ausgestattet ist, abschließt, und dass die Öffnungselemente für den Mehrportions-Milchpulverbehältermittels und der Schütttrichter für die Zuführung des Milchpulvers zu der Fördereinheit die das Milchpulver zur Misch- und Schäumvorrichtung fördert, Teil des Zubereitungsgerätes sind. Ausführungsbeispiele der Erfindung werden im folgenden anhand der Figuren 1 bis 3, 7 bis 18c einer Zeichnung näher beschrieben, woraus sich weitere vorteilhafte Merkmale der Erfindung ergeben können. Hingegen gehören die Figuren 4, 4a, 5, 5a und 6 nicht zur Erfindung. Es zeigen
- Figur 1: Schematisch, teilweise geschnitten, ein Getränkezubereitungsgerät mit einer Kaffeebrüheinheit for loses Kaffeepulver und einer Andockvorrichtung für einen Mehrportionbehälter mit einem angedockten, teilweise geschnittenen Mehrportionsbehälter, einer Anwesenheitsprüfvorrichtung für den Mehrportionsbehälter, einer senkrechten Ausstoßwelle für die Verschlusskappe des Mehrportionbehälters mit einer Förderschnecke und einer Misch- und Schäumvorrichtung,
- Figur 2: schematisch, teilweise geschnitten, ein Getränkezubereitungsgerät mit einer Brüheinheit für eine vorportionierte Kaffeekapsel mit einer eingesetzten Kaffeekapsel, einem angedockten teilweise geschnittenen Mehrportionbehälter, einer Anwesenheltsprüfvorrichtung für den Mehrportionbehälter, einer senkrechten Ausstoßwelle für die Verschlusskappe des Mehrportionbehälters mit einer Förderschnecke und einer Misch- und Schäumvorrichtung,
- Figur 3: die Seitenansicht des Getränkezubereitungsgerätes von Fig1,
- Figur 4: teilweise geschnitten, einen zylindrischen Mehrportionbehälter mit einem sich trichterförmig verjüngenden unteren Abschnitt, der in einen zylindrischen Hals übergeht, einem innen am Halsansatz liegenden teilweise offenen Boden, einem in einer in dem Hals liegenden Nut eingerasteten drehbaren Verschlusszylinder mit einer teilweise offenen Oberseite, wobei der geschlossene Teil seiner Oberseite den teilweise offenen Boden des Mehrportionsbehälterbodens abdeckt, einem als Drehsicherung für den Verschlusszylinders vorgesehenen, am Verschlusszylinder angebrachten Arretierungssteg, und einem am Umfang des Halses angeordneten Bajonettverschluss-element,
- Figur 4a: die Unteransicht des Mehrportionbehälters von Figur 4,
- Figur 5: einen Schnitt durch die zur Figur 5 gehörige Bajonett Andockvorrichtung für den Mehrportionbehälter mit der Milchpulver Förderstrecke und der Förderschnecke und einer Misch - und Schäumvorrichtung,
- Figur 5a: die Draufsicht auf die Bajonett-Andockvorrichtung von Figur 5,
- Figur 6: teilweise geschnitten, den an die Andockvorrichtung der Brüheinheit angedockten und verriegelten Mehrportionbehälter von Figur 4 mit dem auf Durchlass seiner Bodenöffnung gedrehten Mehrportionbehälter,
- Figur 7: teilweise geschnitten, einen zylindrischen Mehrportionbehälter mit einer in den Hals innen eingepressten hutförmigen Verschlusskappe und einem am Hals außen angeordneten Gewinde,
- Figur 7a: die Unteransicht des Mehrportion-Milchpulvers von Figur 7,
- Figur 8: einen Schnitt durch die zur Figur 7 gehörige Gewinde-Andockvorrichtung für den Mehrportionbehälter mit einer senkrechten Welle für die Mehrportionbehälter Verschlusskappe und einer mit einer Welle kombinierten Förderschnecke für das Milchpulver und einer Misch- und Schäumvorrichtung,
- Figur 9: teilweise geschnitten, die Welle und die Förderschnecke von Figur 8 als Detail,
- Figur 10: teilweise geschnitten, die Andockvorrichtung von Figur 8 mit dem angedockten Mehrportionbehälter von Figur 7 mit der senkrecht angeordneten Welle, mit der Förderschnecke, der ausgestoßenen Verschlusskappe und der Misch- und Schäumvorrichtung,
- Figur 11: teilweise geschnitten, einen zylindrischen Mehrportionbehälter mit einer in den Hals innen eingepressten Verschlusskappe und einem am Hals angeordneten Bajonettverschlusselement,
- Figur 11a: die Unteransicht des Mehrportionbehälters von Figur 11,
- Figur 12: teilweise geschnitten, einen zylindrischen Mehrportionbehälter mit einer innen am Halsansatz angeordneten Verschlussfolie und einem am Hals angeordneten Bajonettverschlusselement,
- Figur 12a: die Unteransicht des Mehrportionbehälters von Figur 12,
- Figur 13: einen Schnitt durch die zu den Figuren 11 und 12 gehörige Bajonettandockvorrichtung für den Mehrportionbehälter und der Ausstoßwelle für die Verschlusskappe des Mehrportionbehälters von Figur 11 oder für die Verschlussfolie des Mehrportionbehälters von Figur 12 und der Misch- und Schäumvorrichtung,
- Figur 13a: zeigt die Draufsicht auf die Bajonett-Andockvorrichtung von Figur 13,
- Figur 13b: einen Schritt durch die Schäumkammer der Misch- und Schäumvorrichtung in Höhe des Düseneintrittes der Wasserzuführung,
- Figur 14: teilweise geschnitten, einen zylindrischen Mehrportionbehälter mit einer innen vor dem Hals angeordneten Verschlussfolie und einem am Hals angeordneten Bajonettverschlusselement,
- Figur 14a: die Unteransicht des Mehrportionbehälters von Figur14,
- Figur 15: einen Schnitt durch die zu dem Mehrportionbehälter von Figur 14 gehörige Bajonett Andockvorrichtung mit einem Aufstechdorn für die Verschlussfolie, der Milchpulver Fördervorrichtung und der Misch - und Schäumvorrichtung,
- Figur 16: teilweise geschnitten, die Andockvorrichtung von Fig.15 mit dem angedockten Mehrportionbehälter von Fig.14 mit durchstoßener Verschlussfolie und der Misch- und Schäumvorrichtung,
- Figur 16a: einen Schnitt durch die Andockvorrichtung von Figur 16 mit dem angedockten Mehrportionbehälter,
- Figur 17: schematisch in auseinandergenommener Darstellung ein Zweiwege-Keramikscheibenventil zur Heißwasserzufuhr zu der Kaffeebrühkammer und/oder der Misch- und Schäumvorrichtung,
- Figur 18a: schematisch die Stellung des Keramikscheibenventils und eines Luftsperrschiebers für die Zubereitung von Cappuccino, sowie ein zugehöriges Ablaufdiagramm,
- Figur 18b: schematisch die Stellung des Keramikscheibenventils und eines Luftsperrschiebers für die Zubereitung von Espresso sowie ein zugehöriges Ablaufdiagramm,
- Figur 18c: schematisch die Stellung des Keramikscheibenventils und eines Luftsperrschiebers für die Zubereitung von Latte Macchiato sowie ein zugehöriges Ablaufdiagramm.

Die Figur 1 zeigt ein Getränkezubereitungsgerät 1 mit einem Sockel 2, einem Auffanggefäß 3 sowie eine Kaffeebrühkammer 6 und einem in der Andockvorrichtung 7 angedockten Mehrportionbehälter 41 mit ausgestoßener Verschlusskappe 44. Unter der Andockvorrichtung 7 ist eine Misch- und Schäumvorrichtung 27 angeordnet. In der Andockvorrichtung ist eine Anwesenheitsprüfvorrichtung 8 vorgesehen. Zum Einschalten des Zubereitungsgerätes ist ein Netzschalter 4 und zur Getränkeartwahl eine Gruppe Programmwahltasten 5 vorgesehen.

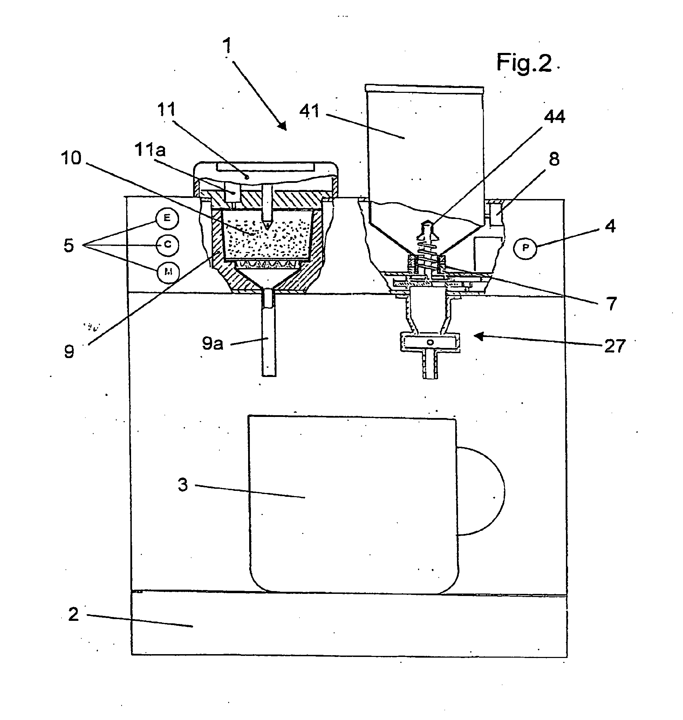

Die Figur 2 zeigt ein Getränkezubereitungsgerät 1 mit einem Sockel 2, einem Auffanggefäß 3 sowie eine Kaffeebrühkammer 6 in Form einer Aufnahmevorrichtung 9 für eine Kaffeeportionskapsel mit einer eingesetzten Kaffeeportionskapsel 10, einer in die Kaffeeportionskapsel eingestochenen Wasserzuführnadel 11a, einer Anwesenheitsprüfvorrichtung 11 b und einem Oberteil 11 in geschlossenem Zustand, sowie einem in der Andockvorrichtung 7 angedockten Mehrportionbehälter 41 mit ausgestoßener Verschlusskappe 44. Unter der Andockvorrichtung 7 ist eine Misch- und Schäumvorrichtung 27 angeordnet.

Zum Einschalten des Zubereitungsgerätes ist ein Netzschalter 4 und zur Getränkeartwahl eine Gruppe Programmwahltasten 5 vorgesehen.

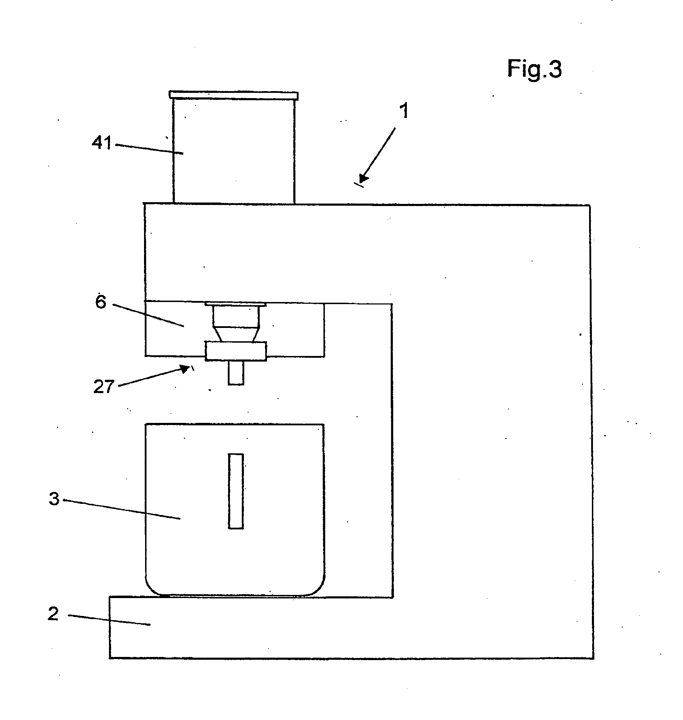

In der Figur 3 ist das Zubereitungsgerät 1 in einer Seitenansicht mit einem Sockel 2, einem Auffanggefäß 3, einer Kaffeebrühkammer 6, einem angedockten Mehrportion-Milchpulverbehälter 41 und einer Schäumvorrichtung 27 dargestellt.

Bei der in den Figuren 4 und 4a gezeigten Ausführungsform eines Mehrportion-Milchpulverbehälters 12 verschließt der mit seiner Rastwulst 20 in der Rastnut 15 des Halses 13 des Mehrportion-Milchpulverbehälters 12 eingerastete Verschlusszylinder 18 mit dem geschlossenen Abschnitt 21 seiner Oberseite die teilweise Öffnung 17 des Mehrportions-Milchpulverbehälterbodens 16, so dass der Mehrportions-Milchpulverbehälter 12 dicht verschlossen ist. Der Hals 13 des Mehrportions-Milchpulverbehälters 12 ist mit einem Bajonettverschlusselement 14 zum Andocken an das Getränkezubereitungsgerät versehen. Das Getränkezubereitungsgerät ist zum Andocken des Mehrportions-Milchpulverbehälters mit einem Bajonettverschluss 25 ausgestattet Der Verschlusszylinder 18 ist mit einem Arretierungssteg 23 versehen der in Verbindung mit einem Rockhaltewinkel 26 der Andockvorrichtung 24 des Zubereitungsgerätes eine Drehung des Verschlusszylinders 18 während des Andockvorganges verhindert. Unterhalb der Andockvorrichtung 24 ist eine Förderstrecke 40 angeordnet, die mittels einer durch eine Motor-Getriebeeinheit 38 angetriebene Förderschnecke 22, das Milchpulver, zu einer Misch- und Schäumvorrichtung die allgemein mit 27 bezeichnet ist, fördert. Die Förderstrecke 40 ist mit einem Durchbruch 40a versehen, durch den das Milchpulver in den Einlauf der Misch- und Schäumvorrichtung fällt. Die Misch- und Schäumeinheit 27 umfasst im Wesentlichen einen Einlauftrichter 28, unterhalb des Einlauftrichters eine Schäumkammer 35 und unter dieser eine Auslaufstrecke 36. Diese Teile der Schäumvorrichtung sind, wie in der Zeichnung dargestellt, zu einer virtuellen Mittelachse konzentrisch übereinander angeordnet und im Wesentlichen rotationssymmetrisch ausgebildet. Eine obere Deckwand der Schäumkammer 35 ist mittig mit einer Pulvereinlauföffnung 29 durchbrochen und geht über diese in den über ihr befindlichen Einlauftrichter 28 über. Der Durchmesser der kreisrunden Pulvereinlauföffnung ist kleiner als der Innendurchmesser der Schäumkammer. Von der Pulvereingangsöffnung 29 ausgehend, erweitert sich das Innere des Einlauftrichters 28 progressiv nach oben.

In die Schäumkammer 35 mündet eine Düse 33, die so in der zylinderischen Wand der Schäumkammer 35 angeordnet ist, dass die Düse tangential zu einer Innenwand der Schäumkammer offen endet. Die Düse ist etwa in halber Höhe der zylindrischen Wand der Schäumkammer 35 angeordnet.

Zum Schäumen als auch nur zur Herstellung eines Getränkes aus gelöstem Milchpulver steht eine Wasserleitung 30 stromaufwärts über einen Durchlauferhitzer 39 und einer Pumpe 37 mit einer nicht dargestellten Wasserquelle in Verbindung. Stromabwärts versorgt sie über ein Keramikscheibenventil 70, den Keramikventilauslauf 74 und einen Durchflussmesser 76 (flow meter) den Wassereinlauf 34 für die Düse 33 mit Heißwasser. In der Nähe des Wassereinlaufes 34 in die Düse 33 mündet in die Wassereinlaufleitung 34 eine Luftstrecke 31, die über einen Sperrschieber 32 mit der äußeren Atmosphäre in Verbindung steht. Der Sperrschieber 32 ist zur Schaumerzeugung geöffnet. Um die Transportmenge des Pulvers durch die Förderschnecke 22 mit der mittels der Wasserpumpe 37 geförderten Wassermenge zu koordinieren, steht ein nicht dargestellter Antrieb der Wasserpumpe 37 mit dem Förderschneckenantrieb 38 über eine Kopplung in Verbindung, die in Figur 4 durch eine durchbrochene Linie angedeutet ist und die durch ein verbindendes Getriebe oder eine gemeinsame Steuereinrichtung der Antriebe realisiert sein kann, um ein optimales Mengenverhältnis des Milchpulvers zu Heißwasserdurchfluss zu gewährleisten.

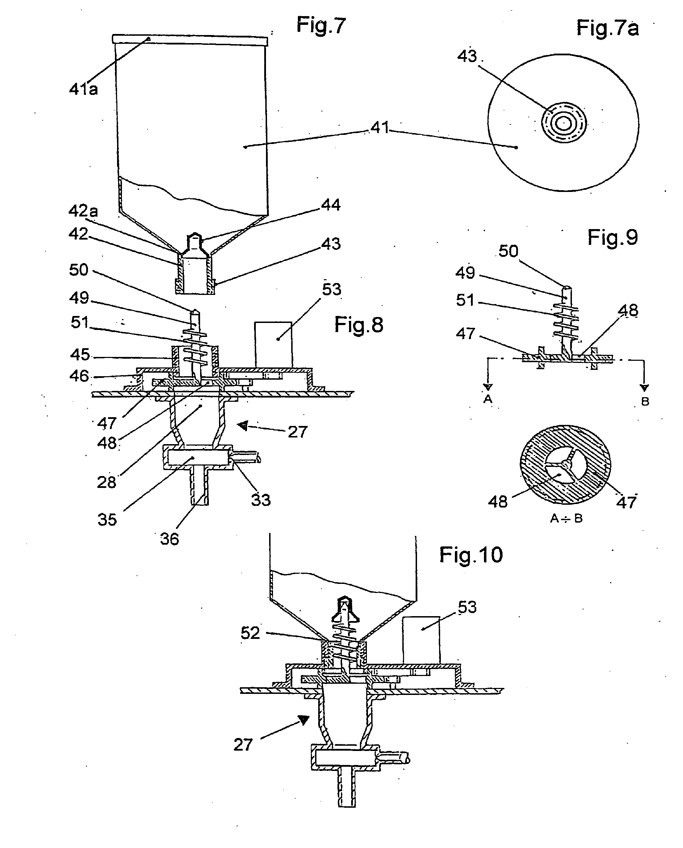

Der Hals 42 der in den Figuren 7 und 7a dargestellten Ausführungsform eines Mehrportions-Milchpulverbehälters 41 ist mit einer am inneren Halsansatz 42a mit einer hutförmigen Verschlusskappe 44 verschlossen. Die Hutkappe 44 ist in den Halsansatz eingepresst. Am äußeren Umfang des Halses 42 ist ein Gewinde 43 ausgeformt. Die zu dieser Ausführungsform eines Mehrportions-Milchpulverbehälters 41 gehörende, in Figur 8 gezeigte Andockvorrichtung 46 ist mit einem Andockring 45, der mit einem Innengewinde versehen ist, ausgestattet. In der Andockvorrichtung 46 ist eine senkrechte Ausstoßwelle 49 mit einer Förderschnecke 51 angeordnet. Die Förderschnecke 51 ist mit einem Antriebsrad 47 versehen, welches von einer Motor-Getriebeeinheit 53 angetrieben wird. Die Förderschnecke windet sich um eine zentral angeordnete Welle 49, deren Spitze 50 geeignet ist, während des Andockvorganges die Verschlusskappe 44 aus ihrem Sitz im Halsansatz des Mehrportions-Milchpulverbehälters 41, wie in Fig.10 gezeigt, nach innen zu stoßen. Das Antriebsrad 47der Förderschnecke ist mit Durchbrüchen 48 für den Durchlauf des Milchpulvers versehen. Die unterhalb der Andockvorrichtung 46 angeordnete Misch- und Schäumvorrichtung 27 entspricht der in der Fig.5 beschriebenen.

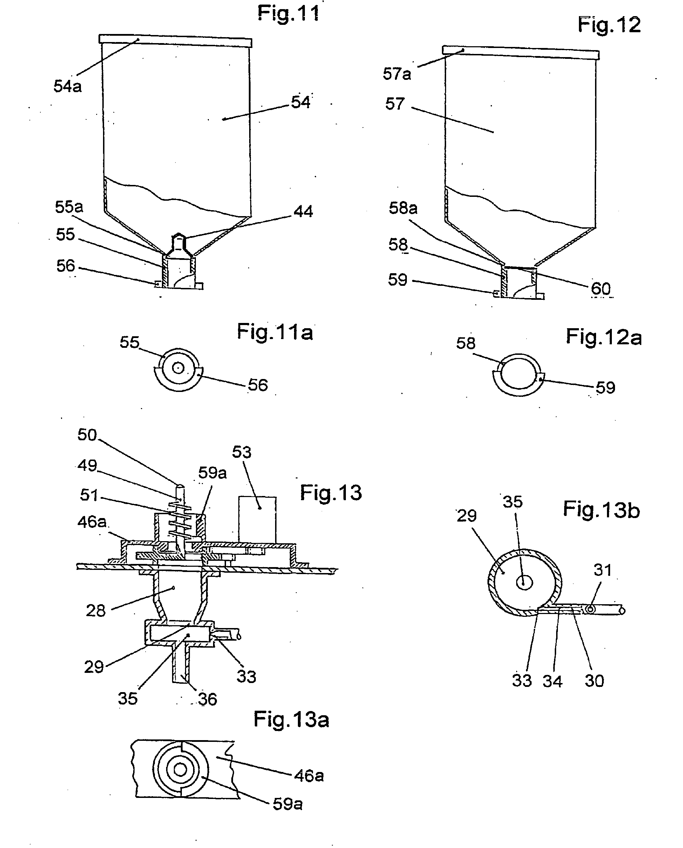

Die in den Figuren 11 und 11a dargestellte Ausführungsform eines Mehrportions-Milchpulverbehälters 54 und die zugehörige Andockvorrichtung 46a unterscheiden sich von der in den Fig. 7 und 7a dargestellten Ausführungsform 41 lediglich durch Bajonettanschlussvorrichtungen 56 an dem Mehrportions-Milchpulverbehälter 54 und dem Bajonettverschluss 59a an der Andockvorrichtung 46a.

Bei der in Fig.12 und 12a dargestellten Ausführungsform eines Mehrportions-Milchpulverbehälters 57 ist dieser an seinem inneren Halsansatz 58a mit einer Verschlussfolie 60 verschlossen. In der zugehörigen Andockvorrichtung 46a ist, wie in Fig.13 gezeigt, ebenfalls eine senkrechte Förderschnecke 51 angeordnet, die mit einem Antriebsrad 47 versehen ist, weiches von einer Motor-Getriebeeinheit 53 angetrieben wird. Die Förderschnecke 51 windet sich um eine zentral angeordnete Ausstoßwelle 49, deren Spitze 50 geeignet ist, während des Andockvorganges die Verschlussfolie 60 im Halsansatz 57a des Mehrportion-Milchpulverbehälters zu durchstoßen. Das Antriebsrad 47 der Förderschnecke 51 ist mit Durchbrüchen 48 für den Durchlauf des Milchpulvers versehen. Die Andockelemente 59 und 59a sind in Form eines Bajonettverschlusses ausgebildet

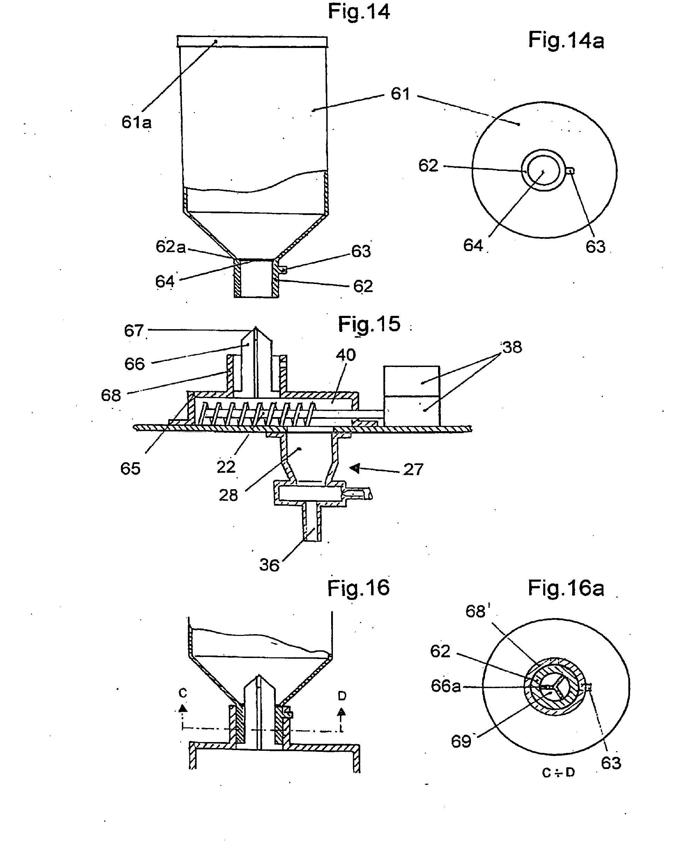

Der in den Figuren 14 und 14a dargestellte Mehrportions-Milchpulverbehälter 61 ist an seinem inneren Halsansatz 62a mit einer Verschlussfolie 64 verschlossen. Die Andockvorrichtung 65 ist mit einem Aufstechdorn 66 versehen, der geeignet ist, während des Andockvorganges die Verschlussfolie 64 zu durchstechen. Der Aufstechdorn 66 ist aus mindestens drei von einer senkrechten Mittelachse radial ausgehenden senkrecht verlaufenden Stegen 66a, die an ihrem oberen Ende in eine gemeinsame Spitze 67 auslaufen, gebildet. Die Mehrportions-Milchpulvereinheit 61 und die Andockvorrichtung 65 sind mit Bajonett-Anschlussvorrichtungen 63 und 68 ausgestattet.

Alle Mehrportions-Milchpulvereinheiten und die zugehörigen Andockvorrichtungen sind bevorzugt mit einer Bajonett- oder Gewindeandockvorrichtungen versehen. Ebenso ist es denkbar, die Andockvorrichtungen in Form eines Schnappverschlusses oder anderen Andock-Konstruktionen darzustellen.

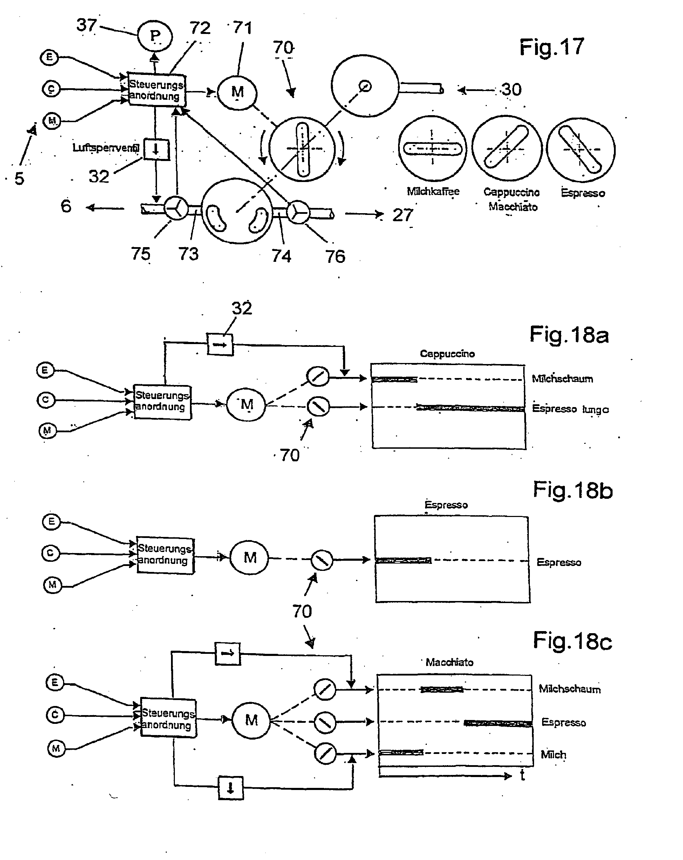

In Figur 17 ist das Zweiwege-Keramikscheibenventil 70, welches an die Heißwasserzuführleitung 30 angeschlossen ist, mit drei auseinandergenommen dargestellten Keramikscheiben gezeigt. Von den drei Scheiben weist eine äußere Scheibe einen Ausgang 73 auf, der über einen Durchflussmesser (flow meter) 75 den Brühwasserzulauf zu der Kaffee- oder Kakaobrühkammer 6 mit Brühwasser versorgt, und einen weiteren Ausgang 74, der über einen Durchflussmesser (flow meter) 76 mit der Heißwasserzuführleitung 34 zur Misch- und Schäumvorrichtung 27 verbunden ist. Je nach der Stellung der mittleren Scheibe des Keramikventils 70 kann der Ausgang 73 oder der Ausgang 74 oder beide Ausgänge gleichzeitig zur Zubereitung von Kaffee oder Milchschaum beaufschlagt werden.

In der in dem linken Teil der Figur 4 dargestellten Position der mittleren Scheibe des Keramikventils befindet sich diese in ihrer Nullstellung. Zur Zubereitung eines Getränks kann je nach gewünschter Getränkeart die Scheibe entweder von Hand oder programmgesteuert mittels eines Motors 71 nacheinander in die Position "Espresso" oder "Milch/Milchschaum", "Latte Macchiato" oder "Milchkaffee" gedreht werden. Diese möglichen Drehstellungen sind für die mittlere Scheibe in dem rechten Teil der Figur 4 angezeigt. Nach einem Zubereitungszyklus wird die mittlere Scheibe entweder automatisch oder von Hand oder zweckmäßigerweise mit dem Öffnungsvorgang der Brühkammer gekoppelt, wieder in ihre Nullstellung gedreht.

In den Figuren 18a, 18b, 18c ist schematisch die jeweilige Stellung des Keramikventils 70 und des Luftsperrschiebers 32 sowie das dazugehörige Zubereitungs-Ablaufdiagramm für die Zubereitung von Cappuccino, Espresso oder Latte Macchiato dargestellt.

Für die Zubereitung eines Kaffee- oder Kaffee-Milchgetränkes ergeben sich die folgenden Möglichkeiten:

Für die Zubereitung eines Kaffees wird die Brühkammer 6 mit losem Kaffeepulver oder einer vorportionierten Kaffeeportionseinheit 10 beladen. Die Beschickung der Brühkammer 6 mit losem Kaffeepulver oder mit einer Kaffee- oder Kakaoportionseinheit 10 unterscheiden sich je nach Bau- und Ausführungsform der Getränkezubereitungsgeräte und sind Stand der Technik und brauchen nicht näher beschrieben zu werden.

Nach Beschicken der Kaffeebrühkammer 6 mit Kaffee oder einer Kaffeeportionseinheit 10 und Einschalten des Zubereitungsgerätes mittels eines Netzschalters 4 wird mittels der Gruppe Programmwahltasten 5 oder eines Programmwahlschalters die Kaffee-/Espressozubereitung angewählt und mittels der Steuerungsanordnung 72 die Ventilanordnung 70 so geschaltet, dass das Brühwasser nur der Kaffeebrühkammer 6 zugeleitet wird. Während des Brühvorganges fließt dann der Kaffeesud über die Auslaufstrecke in das Auffanggefäß 3.

Für die Zubereitung eines Milchgetränkes wird je nach Bauform der Mehrportion-Milchpulverbehälter mittels seiner Andockvorrichtung an die korrespondierende Andockvorrichtung des Getränkezubereitungsgerätes angedockt, indem sein Hals mit den Verriegelungselementen in die Andockvorrichtung eingeführt und mittels seines Bajonett-Verschlusselementes und dem korrespondierenden Bajonettverschluss der Andockvorrichtung durch eine Drehbewegung oder durch Einschrauben mittels seiner Gewinde-Verriegelungselemente in die Gewindeaufnahme der Andockvorrichtung dicht verriegelt wird. Dabei kann mittels einer Prüfvorrichtung, die z.B. mit einem Mikroschalter 8 und einer Steuerungsanordnung 72 realisiert ist, geprüft werden, ob sich ein Mehrportion-Milchpulverbehälter in der Andockvorrichtung befindet.

Nach Einschalten des Zubereitungsgerätes mittels eines Netzschalters 4 wird mittels der Gruppe Programmwahltasten 5 oder eines Programmwahlschalters die Getränkeart angewählt und mittels der Steueranordnung 72 die Ventilanordnung 70 so geschaltet, dass das Heißwasser nur der Kaffeebrühkammer 6 oder nur der Misch- und Schäumvorrichtung 27 oder beiden Vorrichtungen zugeführt wird.

In einer Ausführungsform des Mehrportion-Milchpulverbehälters ist der Hals 42 des Mehrportion-Milchpulverbehälters 41 mit einem Außengewinde 43 ausgestattet. In den Hals 42 des Mehrportion-Milchpulverbehälters 41 Ist eine hutförmige Verschlusskappe 44 eingepresst. Beim Beschicken des Kaffeezubereitungsgerätes wird der Hals 42 des Mehrportion-Milchpulverbehälters 41 in die Gewindehülse 45 der Andockvorrichtung 46 eingeführt und bis zum Anschlag eingeschraubt. Dabei fährt die Spitze 50 der Ausstoßwelle 49 der Förderschnecke 51 in die Verschlusskappe 44 ein und stößt diese aus ihrer Verschlussposition. Durch den dadurch entstehenden ringförmigen Schüttspalt 52 fließt das Milchpulver in die Förderschnecke 51. Für die Zubereitung von Milchschaum werden die Motor-Getriebeeinheit 53 der Förderschnecke 51 und die Wasserpumpe 37 die für die Förderung von Heißwasser und Milchpulver in einem abgestimmten Mengenverhältnis programmiert sind, synchron gestartet. Die Motor-Getriebeeinheit 53 treibt dabei das Förderschneckenzahnrad (47), das eine Baueinheit mit der Förderschnecke 51 bildet an und das Milchpulver wird mittels der Förderschnecke 51 durch die Förderschneckenzahnrad-Durchlässe 48 senkrecht in den Einlauftrichter 28 der Misch- und Schäumvorrichtung 27 gefördert. Die Wasserzuführung und der Schäumvorgang sind mit der ersten Ausführungsform identisch. Der entstandene Milchschaum fließt ebenfalls über die Auslaufstrecke 36 in das Auffanggefäß. Zur Entnahme wird der Mehrportion-Milchpulverbehälter aus der Gewindehülse 45 geschraubt.

Bei einer weiteren Version eines Mehrportion-Milchpulverbehälters dieser Ausführungsform des Verschlusses 44 erfolgt die Ankopplung und die Verriegelung des Milchpulverbehälters 54 nicht mit einem Gewinde sondern mittels eines Bajonettverschlusses 56.

In einer weiteren Ausführungsform eines Mehrportion-Milchpulverbehälters ist der Verschluss des Mehrportion-Milchpulverbehälters 57 mittels einer am inneren Halsansatz 58a angeordneten Verschlussfolie 60 realisiert. Das Andocken des Mehrportion-Milchpulverbehälter 57 an die Andockvorrichtung 46a und Verriegeln erfolgt mittels des am Hals 58 des Mehrportion-Milchpulverbehälters 57 angeordneten Bajonettverschlusselementes 59 und einer Bajonettverschlusshülse 59a an der Andockvorrichtung 46a. Während des Andockvorganges durchstößt die Spitze 50 der Ausstoßwelle 49 der Förderschnecke 51 die Verschlussfolie 60 und durch den entstandenen Aufriss 52 fließt das Milchpulver in die Förderschnecke 51 und diese fördert das Milchpulver direkt senkrecht in den Einlauftrichter 28 der Misch- und Schäumvorrichtung 27. Der Misch- und Schäumvorgang ist mit der ersten Ausführungsform identisch. Der entstandene Milchschaum fließt ebenfalls über die Auslaufstrecke 36 in das Auffanggefäß.

In noch einer weiteren Ausführungsform eines Mehrportion-Milchpulverbehälters 61 ist dieser an seinem innerem Halsansatz 62a ebenfalls mit einer Verschlussfolie 64 verschlossen. Das Andocken und Verriegelung des Mehrportion-Milchpulverbehälters 61 erfolgt ebenfalls mittel eines Bajonettverschluss-elementes 63 am Hals 62 des Mehrportion-Milchpulverbehälters 61 und einem Bajonettverschluss 68. Während des Andockvorganges durchsticht der auf der Andockvorrichtung 65 angeordnete Aufstechdorn 66 mit der Spitze seiner sternförmig angeordneten senkrechten Stege 66a die Verschlussfolie 64 und durch die zwischen den Stegen 66a liegenden Freiräumen 69 fließt das Milchpulver in die Förderstrecke 40 und wird von der Förderschnecke 22 in den Einlauftrichter 28 der Misch- und Schäumvorrichtung 27 gefördert.

Nach einem Misch- und Schäumvorgang fließt der entstandene Milchschaum über die Auslaufstrecke 36 in das Auffanggefäß.

Für die Zubereitung eines Kaffee-Milchgetränkes werden sowohl die Kaffeebrühkammer 6 mit Kaffee beschickt als auch ein Mehrportion-Milchpulverbehälter an die Andockvorrichtung angedockt.

Die Zubereitung des Kaffee-Milchgetränkes erfolgt entweder von Hand oder programmgesteuert nacheinander, wie in den Figuren 18a; und 18 dargestellt, in der Ablauffolge:

Für Cappuccino: Erst Zubereitung von Milchschaum, dann Zubereitung von Kaffee.

Für Latte Macchiato: Erst Zubereitung von Milch, dann Milchschaum, dann Espresso.

### Bezugszeichen

- 1:: Getränkezubereitungsgerät
- 2:: Gerätesockel
- 3:: Auffanggefäß
- 4:: Netzschalter
- 5:: Gruppe Programmwahltasten
- 6:: Kaffeebrühkammer
- 6a:: Kaffeeauslauf
- 7:: Andockvorrichtung
- 8:: Prüfvorrichtung
- 9:: Kaffeekapsel Aufnahmevorrichtung
- 9a:: Kaffeeauslauf
- 10:: Kaffeekapsel
- 11:: Aufnahmevorrichtung Oberteil
- 11a:: Prüfvorrichtung
- 12:: Mehrportion-Milchpulverbehälter
- 12a:: Mehrportion-Milchpulverbehälterdeckel
- 13:: Mehrportion-Milchpulverbehälterhals
- 14:: Bajonettelement
- 15:: Rastwulst
- 16:: Mehrportion-Michpuverbehälterboden; geschlossener Teil
- 17:: Mehrportion-Michpuverbehälterboden; offener Teil
- 18:: Verschlusszylinder
- 19:: Verschlusszylinderdeckel; offener Teil
- 20:: Rastnut
- 21:: Verschlusszylinderdeckel; geschlossener Teil
- 22:: Förderschnecke
- 23:: Rückhaltesteg
- 24:: Andockvorrichtung
- 25:: Bajonettverschluss
- 26:: Rückhaltewinkel
- 27:: Misch - und Schäumvorrichtung
- 28:: Einlauftrichter
- 29:: obere Einlauföffnung
- 30:: Heißwasserleitung
- 31:: Luftleitung
- 32:: Sperrschieber
- 33:: Düse
- 34:: Heißwassereinlaufleitung
- 35:: Schäumkammer
- 36:: Auslaufstrecke
- 37:: Wasserpumpe
- 38:: Motor-Getriebeeinheit
- 39:: Durchlauferhitzer
- 40:: Förderstrecke
- 40a:: Durchbruch
- 41:: Mehrportion-Milchpulverbehälter
- 41a:: Mehrportion-Milchpulverbehälterdeckei
- 42:: Mehrportion-Milchpulverbehälterhals
- 42a:: innerer Halsansatz
- 43:: Andockgewinde
- 44:: Verschlusskappe
- 45:: Gewindehülse
- 46:: Andockvorrichtung
- 47:: Antriebszahnrad
- 48:: Antriebszahnrad-Durchbrüche
- 49:: Ausstoßwelle
- 50:: Förderschneckenwellenspitze
- 51:: Förderschnecke
- 52:: Einlaufspalt
- 53:: Motor-Getriebeeinheit
- 54:: Mehrportion-Milchpulverbehälter
- 54a:: Mehrportion-Milchpulverbehälterdeckel
- 55:: Mehrportion-Milchpulverbehälterhals
- 55a:: innerer Halsansatz
- 56:: Bajonettverschlusselement
- 57:: Mehrportion-Milchpulverbehälter
- 57a:: Mehrportion-Milchpulverbehälterdeckel
- 58:: Mehrportion-Milchpulverbehälterhals
- 58a:: innerer Halsansatz
- 59:: Bajonettverschlusselement
- 60:: Verschlussfolie
- 61:: Mehrportion-Milchpulverbehälter
- 61a:: Mehrportion-Milchpulverbehälterdeckel
- 62:: Mehrportion-Milchpulverbehälterhals
- 62a:: innerer Halsansatz
- 63:: Bajonettverschlusselement
- 64:: Verschlussfolie
- 65:: Andockvorrichtung
- 66:: Aufstechdorn
- 66a:: Aufstechdornstege
- 67:: Aufstechdornspitze
- 68:: Bajonettverschlusshülse
- 70:: Keramikscheibenventil
- 71:: Motor
- 72:: Steuerungsanordnung
- 73:: Keramikscheibenventil-Auslass
- 74:: Keramikscheibenventil-Auslass
- 75:: Durchflussmesser (flow meter)
- 76:: Durchflussmesser (flow meter)

## Patentansprüche

1. Brüheinheit eines Getränkezubereitungsgeräts mit einer ersten Aufnahmevorrichtung, die eine Kaffeebrühkammer (6, 9) ist mit einem Auslauf, die zur Aufnahme von losem Kaffeepulver oder einer Kaffee- oder Kakaoportionseinheit (10) und Zubereitung eines Getränkes durch deren Gebrauch geeignet ist,
wobei die Brüheinheit mit einer zweiten Aufnahmevorrichtung ausgestattet ist, die mit einer Andockvorrichtung (46, 46a, 65) zur Aufnahme eines austauschbaren gekapselten Mehrportionbehälters (41, 54, 57, 61) für Milchpulver geeignet ist,
wobei die Brüheinheit mit einer Misch- und Schäumvorrichtung (27) mit einem Auslauf (36) ausgestattet ist, die mit der Andockvorrichtung (7, 24, 46, 46a, 65) der zweiten Aufnahmevorrichtung in Milchpulver leitender Verbindung steht und zur Zubereitung eines Milchproduktes, insbesondere Milchschaum, geeignet ist, und
wobei die Kaffeebrühkammer und die Andockvorrichtung mit der Misch- und Schäumvorrichtung kompakt als eine gemeinsame Baueinheit ausgebildet sind,
**dadurch gekennzeichnet,**
dass die Andockvorrichtung (46, 46a, 65) mit einem Öffnungselement (50, 66) ausgestattet ist, das geeignet ist, ein Verschlusselement (44, 60, 54) des Mehrportionbehälters (41, 54, 57, 61) durch Anbringen des Mehrportionbehälters an der Andockvorrichtung aus seiner Verschlussposition zu stoßen oder durchzustoßen.

2. Brüheinheit nach Anspruch 1,
**dadurch gekennzeichnet,**
dass die Andockvorrichtung (46) mit einer eine Spitze (50) aufweisende Ausstoßwelle (49) einer Förderschnecke (51) als Öffnungselement ausgestattet ist, die beim Einschrauben eines Außengewindes (43) an einem Hals (42) des Mehrportion-Milchpulverbehälters (41) in eine Gewindehülse (45) der Andockvorrichtung (46) eine hutförmige Verschlusskappe (44), die in dem Hals (42) des Mehrportion-Milchpulverbehälters (41) eingepresst ist, aus ihrer Verschlussposition stößt.

3. Brüheinheit nach Anspruch 1,
**dadurch gekennzeichnet,**
dass die Anbringung des Mehrportion-Milchpulverbehälters (54) statt durch Einschrauben in eine Gewindehülse der Andockvorrichtung mittels eines Bajonettverschlusses (56) erfolgt.

4. Brüheinheit nach Anspruch 1,
**dadurch gekennzeichnet,**
dass die Andockvorrichtung (46a) als Öffnungselement mit einer Ausstoßwelle (49) als Öffnungselement ausgestattet ist, die beim Anbringen eines am Hals (58) des Mehrportion-Milchpulverbehälters angeordneten Bajonettverschlusselements (59) an einer Bajonettverschlusshülse (59a) der Andockvorrichtung (46a) mit ihrer Spitze (50) eine in einem inneren Halsansatz (58a) angeordnete Verschlussfolie (60) durchstößt.

5. Brüheinheit nach Anspruch 4,
**dadurch gekennzeichnet,**
dass die Andockvorrichtung (65) mit einem Aufstechdorn (66) statt der Anstoßwelle als Öffnungselement ausgestattet ist, der mit der Spitze seiner sternförmig angeordneten Stege (66a) die Verschlussfolie (64) durchsticht.

6. Brüheinheit nach einem der Ansprüche 2 bis 4,
**dadurch gekennzeichnet,**
dass die Öffnungselemente der Andockvorrichtung als Transportschnecke (51) ausgebildet sind, die das Milchpulver aus der Andockvorrichung in die Misch- und Schäumvorrichtung fördert.

7. Brüheinheit nach Anspruch 1,
**dadurch gekennzeichnet,**
dass die Misch- und Schäumvorrichtung (27) austauschbar ist.

8. Brüheinheit nach Anspruch 1,
**dadurch gekennzeichnet,**
dass die Misch- und Schäumvorrichtung (27) als Wegwerfteil ausgeführt ist.

9. Brüheinheit nach Anspruch 1 ,
**dadurch gekennzeichnet,**
dass der Auslauf (6a; 9a) der Kaffeebrühkammer (6, 9) und der Auslauf der Misch- und Schäumvorrichtung zu einem gemeinsamen Auslauf zusammengeführt sind.

10. Brüheinheit nach Anspruch 1,
**dadurch gekennzeichnet,**
dass das Oberteil (11) der Kaffeebrühkammer (9) mit Dichtungselementen und Verriegelungselementen zum druck- und fluiddichten Verschluss der ersten Aufnahmevorrichtung versehen ist.

11. Brüheinheit nach Anspruch 1,
**dadurch gekennzeichnet,**
dass der Kaffeebrühkammer (9) eine selbsttätige Auswerfervorrichtung für die Portionseinheit zugeordnet ist.

12. Brüheinheit nach Anspruch 1,
**dadurch gekennzeichnet,**
dass an der Kaffeebrühkammer (9) und an der Misch- und Schäumvorrichtung (27) eine für beide Vorrichtungen gleichzeitig aktivierbare Spülvorrichtung vorgesehen ist.

13. Brüheinheit nach Anspruch 1,
**dadurch gekennzeichnet,**
dass je eine Wasserzuführungsleitung an der Kaffeebrühkammer (6, 9) und an der Misch- und Schäumvorrichtung (27) mündet,
dass die Wasserzuführung mit einer Steuerungsanordnung (72) aktivierbar ist, die so ausgebildet ist, dass Wasser im Wesentlichen gleichzeitig der Kaffeebrühkammer (6, 9) und der Misch- und Schäumvorrichtung (27) zugeführt wird oder aber nur der Kaffeebrühkammer oder nur der Misch- und Schäumvorrichtung.

14. Brüheinheit nach Anspruch 13,
**dadurch gekennzeichnet,**
dass die Steuerungsanordnung (72) eine gesteuerte Ventilanordnung (70) umfasst, über welche die Wasserzufuhr zu der Kaffeebrühkammer und zu der Misch- und Schäumvorrichtung erfolgt.

15. Brüheinheit nach Anspruch 14,
**dadurch gekennzeichnet,**
ein Keramikscheibenventil (70) als gesteuertes Ventil.

16. Brüheinheit nach Anspruch 14,
**dadurch gekennzeichnet,**
Magnetventile als gesteuerte Ventile.

17. Brüheinheit nach Anspruch 14,
**dadurch gekennzeichnet,**
Schlauchklemmventile als gesteuerte Ventile.

18. Brüheinheit nach Anspruch 13 oder 14,
**dadurch gekennzeichnet,**
dass an der zweiten Aufnahmevorrichtung eine Prüfvorrichtung (8) angeordnet ist, die mit der Steuerungsanordnung (72) in Verbindung
steht, und
dass die Prüfvorrichtung und die Steuerungsanordnung so ausgebildet sind, dass eine Wasserzufuhr zu der Misch- und Schäumvorrichtung (27) nur dann freigeschaltet wird, wenn ein Mehrportionbehälter angedockt ist.

19. Brüheinheit nach Anspruch 13 oder 14,
**dadurch gekennzeichnet,**
dass in der Kaffeebrühkammer (9) eine Prüfeinheit (11a) angeordnet ist, die mit der Steuerungsanordnung (72) in Verbindung steht, und dass die Prüfeinheit und die Steuerungsanordnung so ausgebildet sind, dass eine Wasserzufuhr zu der Kaffeebrühkammer nur dann freigeschaltet wird, wenn sich eine Portionseinheit (10) in der Kaffeebrühkammer befindet.

20. Brüheinheit nach Anspruch 10,
**dadurch gekennzeichnet,**
dass an der Kaffeebrühkammer (9) Prüfmittel vorgesehen sind, die die Zubereitungswasserzufuhr unterbrechen, wenn die Kaffeebrühkammer nicht geschlossen ist oder während des Zubereitungsvorganges geöffnet wird.

21. Brüheinheit nach Anspruch 13 oder 14,
**dadurch gekennzeichnet,**
dass die Steuerungsanordnung (72) geeignet ist, eine fest programmierte Reihenfolge und Menge der Wasserzufuhr in die Kaffeebrühkammer (6, 9) und in die Misch- und Schäumvorrichtung (27) mittels einer Ventilanordnung (70) und Durchflussmessern (flow meter) (75, 76) zu steuern, wodurch selbsttätig ein Kaffee-Milchgetränk zubereitet werden kann.

22. Brüheinheit nach Anspruch 13 oder 14,
**dadurch gekennzeichnet,**
dass in der Steuerungsanordnung (72) mehrere Programme für Reihenfolge und Menge der Wasserzufuhr in die Kaffeebrühkammer (6, 9) und in die Misch- und Schäumvorrichtung (27) gespeichert sind, und dass in der Steuerungsanordnung eine Auswahlvorrichtung vorgesehen ist, mit der eines der gespeicherten Programme auswählbar ist.

23. Brüheinheit nach Anspruch 13 oder 14,
**dadurch gekennzeichnet,**
dass die Steuerung der Zubereitungsreihenfolge und der jeweiligen Menge der einzelnen Getränkekomponenten von Hand mittels Steuerungsmitteln erfolgen kann.

24. Brüheinheit nach Anspruch 1.
**dadurch gekennzeichnet,**
dass die Brüheinheit mit einem Dampfgenerator und einer Dampfdüse ausgestattet ist.

## Claims

1. Brewing unit of a device for preparing beverages comprising a first receiving means which is a coffee brewing chamber (6, 9) having an outflow, which is suited for receiving loose coffee powder or a coffee or cocoa portion unit (10) and preparation of a beverage by the use thereof,
wherein the brewing unit is provided with a second receiving means which with a docking means (46, 48a, 65) is suited for receiving an exchangeable encapsulated multi-portion container (41, 54, 57, 61) for milk powder,
wherein the brewing unit is provided with a blending and frothing means (27) having an outflow (36), which is in milk powder conducting connection with the docking means (7, 24, 46, 46a, 65) of the second receiving means, and is suited for the preparation of a milk product, particularly milk froth, and
wherein the coffee brew chamber and the docking means are designed together with the blending and frothing means as a common building unit **characterized in**
that the docking means (46, 46a, 65) is provided with an opening element (50, 65) which by attaching the multi-portion container to the docking means is suited to push a locking element (44, 60, 64) of the multi-portion container (41, 54) from its locking position or to pierce a locking element (60, 64) of the multi-portion container (57, 61).

2. Brewing unit according to claim 1,
**characterized in**
that the docking means (46) is provided with an ejector bar (49) with a tip (50) of a screw conveyor (51)as an opening element which when screwing an external thread (43) on a neck (42) of the multi-portion milk powder container (41) into a threaded sleeve (45) of the docking means (46) pushes a hat-shaped locking cap which is pressed into the neck (42) of the multi-portion milk powder container (41) out of its locking position.

3. Brewing unit according to claim 1,
**characterized in**
that the attachment of the multi-portion milk powder container (54) is effected instead of screwing into a threaded sleeve of the docking means by means of a bayonet catch.

4. Brewing unit according to claim 1,
**characterized in**
that the docking means (46a) includes as the opening element an ejector bar (49) as the opening element which, when attaching a bayonet catch element (59) disposed on the neck (58) of the multi-portion milk powder container to a bayonet catch sleeve (59a) of the docking means (46a) pierces with its tip (50) through a closure foil (60) provided in an inner neck projection.

5. Brewing unit according to claim 4,
**characterized in**
that the docking means (65) is provided with a piercing spike (66) rather than with an ejector bar as the opening element, which pierces with the tip of its radially disposed legs (66a) through the closure foil (64).

6. Brewing unit according to one of claims 2 to 4,
**characterized in**
that the opening elements of the docking means are designed as a screw conveyor conveying the milk powder from the docking means into the blending and frothing means.

7. Brewing unit according to claim 1,
**characterized in**
that the blending and frothing means (27) is exchangeable.

8. Brewing unit according to claim 1,
**characterized in n**
that the blending and frothing means (27) is designed as a throw-away part.

9. Brewing unit according to claim 1,
**characterized in**
that the outflow (6a, 9a) of the coffee brewing chamber (6, 9) and the outflow of the blending and frothing means are joined to constitute one common outflow.

10. Brewing unit according to claim 1,
**characterized in**
that the upper portion (11) of the coffee brewing chamber (9) is provided with sealing elements and locking elements for pressure and fluid tight locking of the first receiving means.

11. Brewing unit according to claim 1,
**characterized in**
that the coffee brewing chamber (9) is provided with an automatic ejector means for the portion unit.

12. Brewing unit according to claim 1,
**characterized in**
that both on the coffee brewing chamber (9) and on the blending and frothing means (27) a rinsing means is provided which can simultaneously be activated for both devices.

13. Brewing unit according to claim 1,
**characterized in**
that one water feeding duct each opens on the coffee brewing chamber (6, 9) and on the blending and frothing means (27),
that the water supply can be activated by a control arrangement (72) which is designed so that water is either essentially simultaneously fed to the coffee brewing chamber (6, 9) and to the blending and frothing means (27) or only to the coffee brewing chamber or only to the blending and frothing means.

14. Brewing unit according to claim 13,
**characterized in**
that the control arrangement (72) comprises a controlled valve arrangement (70) through which the water supply to the coffee brewing chamber and to the blending and frothing means is effected.

15. Brewing unit according to claim 14,
**characterized by**
a ceramic disc valve (70) as a controlled valve.

16. Brewing unit according to claim 14,
**characterized by**
solenoid valves as controlled valves.

17. Brewing unit according to claim 1,
**characterized by**
pinch valves as controlled valves.

18. Brewing unit according to claim 13 or 14,
**characterized in**
that on the second receiving means a testing means (8) is arranged which is connected with the control arrangement (72) and
that the testing means and the control arrangement are so designed that a water supply to the blending and frothing means (27) is permitted only if and when a multi-portion container is docked on.

19. Brewing unit according to claim 13 or 14.
**characterized in**
that in the coffee brewing chamber (9) a testing unit (11 a) is arranged which is connected with the control arrangement (72) and that the testing unit and the control arrangement are so designed that a water supply to the coffee brewing chamber is permitted only if and when a portion unit (10) is in the coffee brewing chamber.

20. Brewing unit according to claim 10,
**characterized in**
that on the coffee brewing chamber (9) testing means are provided which interrupt the preparation water supply when the coffee brewing chamber is not locked or is being opened during the preparation process.

21. Brewing unit according to claim 13 or 14,
**characterized in**
that the control arrangement (72) is suited to control a solidly programmed series and amount of the water supply to the coffee brewing chamber (6, 9) and to the blending and frothing means (27) by means of a valve arrangement (70) and flow meters (75, 76) so that a coffee milk beverage can automatically be prepared

22. Brewing unit according to claim 13 or 14,
**characterized in**
that in the control arrangement (72), a plurality of programs are stored for the sequence and the amount of the water supply to the coffee brewing chamber (6, 9) and to the blending and frothing means (27), and that in the control arrangement selection means are provided by which one of the stored programs may be selected.

23. Brewing unit according to claim 13 or 14,
**characterized in**
that the control of the preparation sequence and the respective amount of the individual beverage components can manually be performed by control means.

24. Brewing unit according to claim 1,
**characterized in**
that the brewing unit is equipped with a steam generator and a steam jet.

## Revendications

1. Unité de percolation d'un appareil de préparation de boissons avec un premier dispositif de réception étant une chambre de percolation de café (6, 9) avec une bouche adaptée pour recevoir de la poudre de café en vrac ou une unité de portion de café ou du cacao (10) et la préparation d'une boisson par son usage,
l'unité de percolation étant équipée d'un deuxième dispositif de réception qui est pourvu d'un dispositif d'amarrage (46, 46a, 65) adapté pour recevoir un récipient multiportions encapsulé remplaçable (41, 54, 57, 61) pour du lait en poudre,
l'unité de percolation étant équipée d'un dispositif mélangeur et de moussage (27) avec une bouche (36) qui est en liaison de conduction de lait en poudre avec le dispositif d'amarrage (7, 24, 46, 46a, 65) du deuxième dispositif de réception, et qui est adapté pour préparer un produit laitier, notamment de la mousse de lait, et
la chambre de percolation de café et le dispositif d'amarrage étant formé d'une manière compacte en tant que module commun avec le dispositif mélangeur et de moussage,
**caractérisé en ce que**
le dispositif d'amarrage (46, 46a, 65) est équipé d'un élément d'ouverture (50, 66) qui est adapté pour éjecter ou percer un élément de fermeture (44, 60, 64) du récipient multiportions (41, 54, 57, 61) de sa position de fermeture par application du récipient multiportions au dispositif d'amarrage.

2. Unité de percolation selon la revendication 1,
**caractérisé en ce que**
le dispositif d'amarrage (46) est équipé d'un arbre éjecteur d'une vis sans fin présentant une pointe en tant qu'élément d'ouverture qui lors du vissage d'un filet extérieur (43) sur un col (42) du récipient multiportions (41) dans une douille filetée (45) du dispositif d'amarrage (46) éjecte de sa position de fermeture un bouchon de fermeture (44) en forme de chapeau qui est pressé dans le col (42) du récipient multiportions (41).

3. Unité de percolation selon la revendication 1,
**caractérisé en ce que**
l'application du récipient multiportions (54) du lait en poudre au lieu du vissage dans une douille filetée du dispositif d'amarrage est réalisée au moyen d'une fermeture à baionnette (56).

4. Unité de percolation selon la revendication 1,
**caractérisé en ce que**
le dispositif d'amarrage (46a) en tant qu'élément d'ouverture est équipé d'un arbre éjecteur (49) en tant qu'élément d'ouverture qui lors de l'application d'un élément de fermeture à baionnette (59) agencé au col (58) du récipient multiportions du lait en poudre à une douille de fermeture à bainnette (59a) du dispositif d'amarrage (46a) avec sa pointe (50) perce une feuille de fermeture (60) agencée à une collerette intérieure (58a) du col.

5. Unité de percolation selon la revendication 4,
**caractérisé en ce que**
le dispositif d'amarrage (65) au lieu de l'arbre éjecteur est équipé d'un mandrin de perçage (66) en tant qu'élément d'ouverture qui perce la feuille de fermeture (64) avec la pointe de ses âmes (66a) agencées en forme d'étoile.

6. Unité de percolation selon l'une quelconque des revendications 2 à 4, **caractérisé en ce que**
les éléments d'ouverture du dispositif d'amarrage sont formés en tant que vis transporteuse (51) transportant le lait en poudre du dispositif d'amarrage dans le dispositif mélangeur et de moussage.

7. Unité de percolation selon la revendication 1,
**caractérisé en ce que**
le dispositif mélangeur et de moussage (27) est remplaçable.

8. Unité de percolation selon la revendication 1,
**caractérisé en ce que**
le dispositif mélangeur et de moussage (27) est réalisé en tant que pièce jetable.

9. Unité de percolation selon la revendication 1, **caractérisé en ce que**
la bouche (6a, 9a) de la chambre de percolation de café (6, 9) et la bouche du dispositif mélangeur et de moussage sont réunies à une bouche commune.

10. Unité de percolation selon la revendication 1, **caractérisé en ce que**
la partie supérieure (11) de la chambre de percolation de café (6, 9) est équipée des éléments d'étanchéité et de verrouillage pour la fermeture étanche sous pression et sous fluide du premier dispositif de réception.

11. Unité de percolation selon la revendication 1, **caractérisé en ce qu'un**
dispositif d'éjection automatique pour l'unité de portion est attribué à la chambre de percolation de café (6, 9)

12. Unité de percolation selon la revendication 1, **caractérisé en ce qu'un**
dispositif de rinçage pouvant être activé pour les deux dispositifs simultanément est prévu à la chambre de percolation de café (9) et au dispositif mélangeur et de moussage (27).

13. Unité de percolation selon la revendication 1, **caractérisé en ce qu'une**
conduite d'alimentation d'eau chacune débouche à la chambre de percolation de café (6, 9) et au dispositif mélangeur et de moussage (27), que l'alimentation d'eau peut être activée par un dispositif de commande (72) qui est formé de manière que de l'eau est alimentée à la chambre de percolation de café (6, 9) et au dispositif mélangeur et de moussage (27) sensiblement en même temps ou seulement à la chambre de percolation de café ou seulement au dispositif mélangeur et de moussage.

14. Unité de percolation selon la revendication 13, **caractérisé en ce que**
le dispositif de commande (72) comprend un ensemble de soupape commandé (70) par lequel l'alimentation d'eau est effectuée à la chambre de percolation de café (6, 9) et au dispositif mélangeur et de moussage.

15. Unité de percolation selon la revendication 14, **caractérisé en ce qu'une**
soupape à disque en céramique (70) est utilisée en tant que soupape commandée.

16. Unité de percolation selon la revendication 14, **caractérisé en ce que**
des électrovannes sont utilisées en tant que des soupapes commandées.

17. Unité de percolation selon la revendication 14, **caractérisé en ce que**
des soupapes de chambre à air sont utilisées en tant que soupapes commandées.

18. Unité de percolation selon la revendication 13 ou 14, **caractérisé en ce qu'au**
deuxième dispositif de réception un dispositif de contrôle (8) est agencé qui est en communication avec le dispositif de commande (72), et que le dispositif de contrôle et le dispositif de commande sont formés de manière qu'une alimentation d'eau au dispositif mélangeur et de moussage (27) n'est libérée que lorsqu'un récipient multiportions est amarré.

19. Unité de percolation selon la revendication 13 ou 14, **caractérisé en ce que**
dans la chambre de percolation de café (9) une unité de contrôle (11a) est agencée qui est en communication avec le dispositif de commande (72), et que l'unité de contrôle (11a) et le dispositif de commande sont formés de manière qu'une alimentation d'eau à la chambre de percolation de café n'est libérée que lorsqu'une unité de portion (10) se trouve dans la chambre de percolation de café.

20. Unité de percolation selon la revendication 10, **caractérisé en ce que**
des moyens de contrôle sont prévus à la chambre de percolation de café (9) interrompant l'alimentation d'eau pour la préparation lorsque la chambre de percolation de café n'est pas fermée ou lorsqu'elle est ouverte pendant l'opération de préparation.

21. Unité de percolation selon la revendication 13 ou 14, **caractérisé en ce que**
**le** dispositif de commande (72) est adapté pour commander une séquence programmée de manière fixe et quantité de l'alimentation d'eau dans la chambre de percolation de café (6, 9) et dans le dispositif mélangeur et de moussage (27) au moyen d'un ensemble de soupape et des débitmètres (75, 76) par lesquels une boisson au café et lait peut être préparée automatiquement.

22. Unité de percolation selon la revendication 13 ou 14, **caractérisé en ce que**
plusieurs programmes pour séquence et quantité d'alimentation d'eau dans la chambre de percolation de café (6, 9) et dans le dispositif mélangeur et de moussage (27) sont mémorisés dans le dispositif de commande (72), et qu'un dispositif de sélection est prévu dans le dispositif de commande avec lequel un des programmes mémorisés peut être sélectionné.

23. Unité de percolation selon la revendication 13 ou 14.
**caractérisé en ce que**
la commande de la séquence de préparation et de la quantité respective des composants individuels de boissons peut être effectuée à la main au moyen des moyens de commande.

24. Unité de percolation selon la revendication 1, **caractérisé en ce que**
l'unité de percolation est équipée d'un générateur de vapeur et d'une buse à vapeur.
